# EUROPÄISCHE PATENTSCHRIFT

(11) **EP 0 912 862 B1**
(45) Veröffentlichungstag und Bekanntmachung des Hinweises auf die Patenterteilung: **07.06.2000**
(21) Anmeldenummer: 97937491.5
(22) Anmeldetag: 16.07.1997
(51) Int. Cl.: F23G 1/00, F23G 5/12, F23G 5/50, F23G 5/46, F23J 15/02

(54) **Verfahren und Vorrichtung zur Feuerbestattung**
Cremation method and apparatus
Procédé et appareil de cremation

(30) Priorität: 17.07.1996 DE 19628741
(43) Veröffentlichungstag der Anmeldung: 06.05.1999
(73) Patentinhaber: SBW SONDERABFALLENTSORGUNG BADEN-WÜRTTEMBERG GmbH, 70736 Fellbach (DE)
(72) Erfinder: MÄRZ, Herbert, D-88690 Uhldingen (DE)
(74) Vertreter: Dreiss, Fuhlendorf, Steimle & Becker
(86) Internationale Anmeldenummer: EP9703797
(87) Internationale Veröffentlichungsnummer: WO9803820

(56) Entgegenhaltungen:
- EP-A- 0 709 622
- DE-A- 4 313 102
- DE-U- 9 414 301
- GB-A- 2 025 028
- US-A- 2 625 121
- US-A- 3 797 415
- US-A- 4 753 181
- US-A- 5 402 739
- PATENT ABSTRACTS OF JAPAN vol. 095, no. 007, 31.August 1995 & JP 07 103443 A (MAEDA CORP), 18.April 1995,

## Beschreibung

Die Erfindung betrifft ein Verfahren und eine Vorrichtung zur Feuerbestattung von sich in Särgen befindenden Leichen in einem Verbrennungsofen, in dessen Wandung zumindest ein Brenner angeordnet ist, dem Brennstoff zugeführt wird, und bei dem die Ableitung des bei der Verbrennung entstehenden Rauchgases durch eine Leitung erfolgt.

Derartige Verfahren zur Feuerbestattung unterliegen heute verstärkten Anforderungen (17. Bundesemissionsschutzverordnung) zum Schutze der Umwelt. Das bedeutet, daß es für die Belastung mit Schadstoffen Höchstwerte gibt, die nicht überschritten werden dürfen. Nach dem Stande der Technik besteht lediglich die Möglichkeit, das in den Kamin entlassene Rauchgas einer Rauchgasreinigung zu unterwerfen. Dies ist jedoch aufwendig. Es ist oft aus Raumgründen in den vorhandenen Anlagen, die nachgerüstet werden müssen, nicht möglich.

Außerdem entstehen bei Beginn des Verbrennungsvorganges durch die Verbrennung des Sarges, der aus Holz ist, große Mengen Kohlenstoffmonoxid, da infolge des vorgegebenen Anteils von Sauerstoff an der zur Verbrennung eingesetzten natürlichen Luft die Sauerstoffmenge, die zur vollständigen Verbrennung des während dieser Phase des Verbrennungsvorganges anfallenden Kohlenstoffs erforderlich wäre, nicht zur Verfügung steht, obwohl dabei derzeit mit Luftzahlen von bis zu 3,5 gearbeitet wird. Es werden also zu Beginn der Verbrennung große Frachten an unverbranntem CO freigesetzt. Dies ist deshalb besonders mißlich, weil CO zur Bildung krebserregender Dibenzofurane und Dibenzodioxine führt.

Die thermische Leistung derartiger Verbrennungsöfen beträgt typischerweise etwa 550 - 600 kW, was einer reiner Leistung von 60 Normkubikmeter (Nm³) Erdgas pro Stunde entspricht. Das bedeutet, daß bei einer Luftzahl von 3,5 pro Stunde ca. 2200 Nm³ Rauchgas produziert werden. Entsprechend groß müssen die wachgeschalteten Rauchgasreinigungskomponenten dimensioniert werden.

Die heute geforderte Nachrüstung bestehender Anlagen ist oft auch deshalb sehr problematisch, weil die vorhandenen Krematoren unter Denkmalschutz stehen, so daß bauliche Veränderungen oft nur schwer oder gar nicht realisierbar sind.

Ein weiteres Problem bereitet die erhebliche anfallende Rauchgaswärme. Während in einigen Ländern die Abwärme wirtschaftlich genutzt wird, ist dies z. B. in Deutschland aus Pietätserwägungen nicht der Fall.

Ein weiteres Problem des Abgases besteht ganz generell darin, daß bei Verbrennung unter Einsatz natürlicher Luft wegen des hohen Stickstoffanteils der Luft (ca. 75 %) Stickoxide (NOx) entstehen, und zwar insbesondere bei hoher Luftzahl. Auch dies macht die Abgasnachreinigung erforderlich.

Die US-A-2,625,121 zeigt eine Einrichtung zur Einäscherung und Aufzehrung von Leichen, gebildet durch drei übereinander angeordnete Kammern, in deren unterster Kammer durch einen Ölbrenner ein Heißgasstrom erzeugt wird, der, ohne noch für eine Verbrennung oder das Ingangsetzen eines Verbrennungsvorgangs ausreichenden Sauerstoff zu enthalten, in die darüber angeordnete mittlere Kammer, in der eine Leiche aufgebahrt werden kann, geführt wird. Dort findet infolge der Temperatureinwirkung des Heißgasstromes die Aufzehrung und Einäscherung der Leiche statt. In der dritten, wiederum darüber angeordneten Kammer werden dann die infolge der Aufzehrung und Einäscherung im Heißgasstrom enthaltenen flüchtigen und brennbaren Bestandteile durch eine Nachverbrennung verbrannt. Dieses Verfahren ist umständlich, benötigt außerordentlich viel Energie und enthält keinerlei Hinweise auf eine Reduzierung der bei Verbrennung entstehenden schädlichen Abgase, insbesondere NOx.

Die DE-A-43 13 102 zeigt ein Verfahren zur Reduzierung der Abgasmengen bei der Verbrennung von Sonderabfällen, deren Heizwertzusammensetzung unterschiedlichster Natur ist, unter Ausschluss natürlicher Luft. Die Verbrennungsluft wird durch ein Verbrennungsgas ersetzt, das aus rückgeführtem Rauchgas und zugesetztem reinen oder im Wesentlichen reinen Sauerstoff gebildet wird. Dieses Verfahren ist verfahrenstechnisch an den besonderen Verlauf des Verbrennungsvorgangs bei der Verbrennung von Leichen nicht angepasst und daher unwirtschaftlich.

Aufgabe der Erfindung ist es daher, ein Verfahren der eingangs genannten Art derart weiterzubilden, daß die schädlichen Abgase verringert und die Energieausnutzung verbessert werden. Dies soll im Falle einer Nachrüstung möglichst unter Erhöhung der Leistungsfähigkeit bestehender Verbrennungsanlagen erreichbar sein.

Erfindungsgemäß wird diese Aufgabe durch die Merkmale des Patentanspruches 1 gelöst. Die Erfindung betrifft ferner mehrere vorteilhafte Weiterbildungen. Diese sind in den Unteransprüchen definiert.

Ausführungsbeispiele der Erfindung in ihrer vorteilhaften Weiterbildungen werden im folgenden unter Bezugnahme auf die beigefügten Zeichnungen näher beschrieben. Es stellen dar:
- Figur 1: ein erstes Ausführungsbeispiel,
- Figur 2: ein zweites Ausführungsbeispiel, und
- Figur 3: eine flexible Schleuse, wie sie bei den beiden Ausführungsbeispielen nach Figur 1 und 2 Verwendung finden kann.

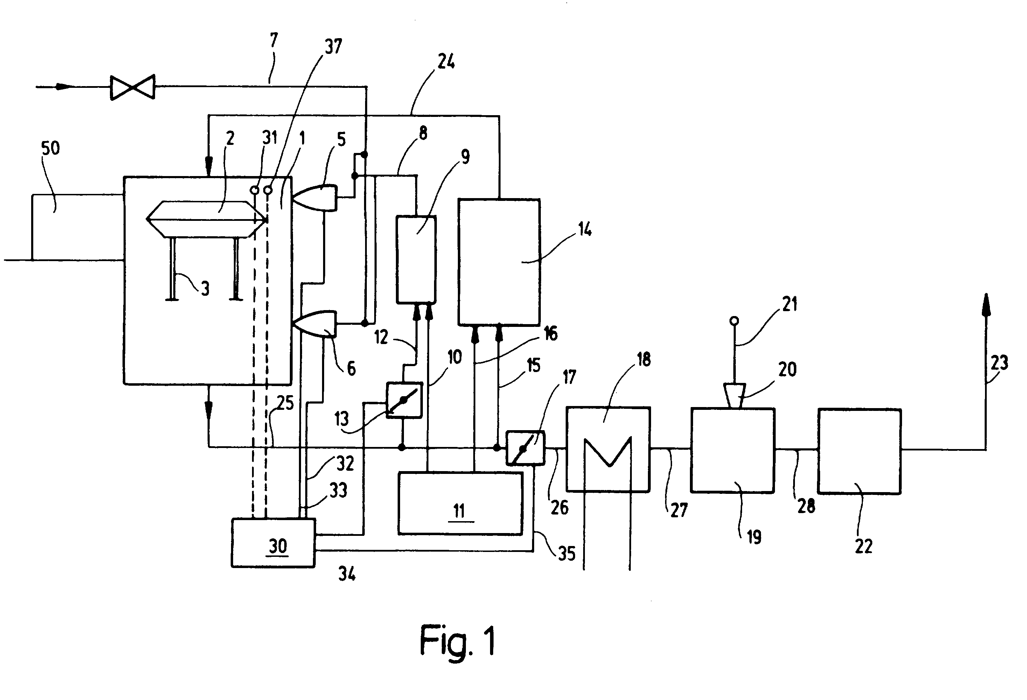

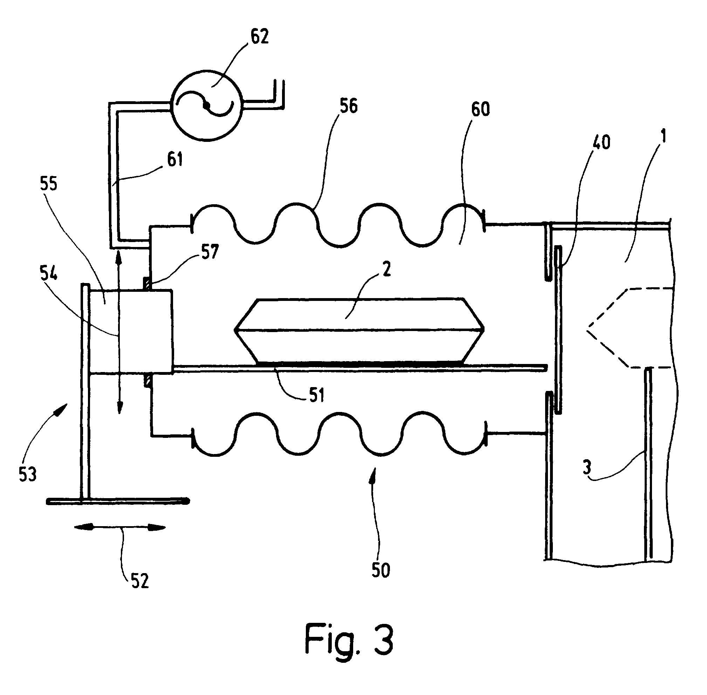

Figur 1 zeigt einen Verbrennungsofen 1. Er ist als sog. Etagenofen ausgebildet. In ihm befindet sich ein Sarg 2, der mit einer darin befindlichen Leiche verbrannt werden soll. Der Sarg steht auf Stützen 3. Die Zuführung des Sarges 2 erfolgt über einer flexiblen Schleuse 50 (siehe dazu im einzelnen Figur 3). In die Wandung des Ofens münden zwei Brenner 5 und 6, denen Stützenergie (z.B. Erdgas) über die Leitung 7 und ein Gemisch aus Sauerstoff und rückgeführtem Rauchgas über die Leitung 8 zugeführt wird. Das Gemisch wird in einem Mischer 9 gebildet. Dem Mischer 9 wird reinen Sauerstoff über die Leitung 10 von einer Sauerstoffquelle, z.B. von einem Vorratsbehälter 11, und rezirkuliertes Rauchgas über die Leitung 12 und die Regelklappe 13 zugeführt. Die Leitung 25, von der die Leitung 12 abgezweigt ist, ist die Rauchgas-Abführ-Leitung des Verbrennungsofens 1.

Die Einrichtung enthält ferner einen weiteren Mischer 14. An ihn gelangt ebenfalls rezirkuliertes Rauchgas, und zwar über die Leitung 15. Er erhält Sauerstoff über die Leitung 16. Die Leitung 15 ist wieder mit der Leitung 25, die das von dem Verbrennungsofen 1 abgeleitete Rauchgas führt, und über die Leitung 16 mit der Sauerstoffquelle 11 verbunden. Den Anteil des rezirkulierten Rauchgases bestimmt die Stellung eine Regelklappe 17, die hinter der Abzweigung der Leitung 15 vorgesehen ist. Die Menge des rezirkulierten Rauchgases kann so eingestellt werden, daß sie etwa 75 % beträgt. Das entspricht etwa dem Anteil Stickstoff in natürlicher Luft. Es entsteht also quasi ein Gemisch künstlicher Luft. Über die Leitungen 26, 27, 28 wird nur noch eine Menge Rauchgas, überwiegend aus CO₂ bestehend abgeführt, die durch die Menge des bei der Verbrennung gebildeten Rauchgases bestimmt ist. Da keine natürliche Luft und damit kein Luft-Stickstoff am Verbrennungsvorgang mehr teilnimmt, kann nur noch möglicherweise im Brennstoff vorhandener Stickstoff zur Bildung von Stickoxiden beitragen. Somit wird die Menge der anfallenden Stickoxide erheblich verringert.

Diejenige Menge Rauchgas, die aus dem Verbrennungskreislauf zwangsläufig entweichen muß, wird zunächst über Leitung 26 an einen Wärmetauscher 18 geführt und gelangt von dort über Leitung 27 z.B. in einen sog. "Flugstrom"-Reaktor 19, dem ein Aktivreinigungsmittel (z.B. "Sorbalit" (R)) (eine Mischung aus Kalkhydrid und pulverisiertem Herdofenkox) über Düsen 20 von einer Leitung 21 her zugeführt wird. Der Wärmetauscher 18 dient u.a. dazu, das Rauchgas soweit abzukühlen, daß die höchstzulässige Betriebstemperatur des Reaktors 19 nicht überschritten wird. Das über die Düsen 20 zugeführte pulverförmige Absorbtionsmittel wird dann in einem Gewebefilter 22 wieder abgereinigt, bevor das gereinigte Rauchgas über den Kamin 23 entweicht.

Wie sich aus dieser Darstellung bereits ergibt, wird ein durch die Stellung der Regelklappen 13 und 17 einstellbarer Anteil des bei der Verbrennung in den Verbrennungsofen 1 entstehenden Rauchgases in den Verbrennungsofen zurückgeführt, und zwar erstens über die Leitung 25, die Regelklappe 13, die Leitung 12, den Mischer 9, die Leitung 8 und die Brenner 5 bzw. 6 und zweitens über die Leitung 25, die Leitung 15, den Mischer 14 und die Leitung 24.

Die zur Verbrennung der Stützenergie (z.B. Erdgas) erforderliche Menge Sauerstoff wird in Abweichung bekannter Verbrennungsanlagen durch Zufuhr von technisch erzeugtem Sauerstoff, mit einer Reinheit von mindestens 90 % von einer Sauerstoffquelle 11, z.B. einem Vorratsbehälter, über die Leitung 10 und den Mischer 9 an den Brennern 5 bzw. 6 zur Verfügung gestellt.

Die Bereitstellung "künstlicher" oder "synthetischer" Luft (also der geschilderten Mischung aus rezirkuliertem Rauchgas und zugemischtem Sauerstoff) erfolgt ferner in einem Mischer 14, von dem sie über die Leitung 24 direkt - d.h. ohne Verbrennung in einem Brenner- zum Verbrennungsofen 1 gelangt. Diese Zufuhr dient dazu, den erheblichen Sauerstoffbedarf zu befriedigen, der durch die Verbrennung des Holzes eines Sarges 2 insbesondere in der Anfangsphase des Verbrennungsvorgangs entsteht und der normalerweise, d.h. bei Verbrennung unter Luftzufuhr, durch den limitierten Anteil von Sauerstoff in der Luft nicht befriedigt werden kann. Bei herkömmlichen Verbrennungsanlagen führt dies, wie erwähnt, in der Anfangsphase zu einem sehr hohen CO (Kohlenmonoxid)-Anteil, da bei natürlicher Luft die Menge zur Verfügung stehenden Sauerstoffs durch den O₂-Anteil an der Luft von 21 % limitiert ist. Durch die direkte einstellbare Zurverfügungstellung von Sauerstoff an der Stelle, an der das Holz des Sarges 2 verbrennt, wird der entstehende CO-Anteil erheblich gesenkt. Die notwendige Energie zur Verbrennung wird außerdem durch den Kohlenstoffanteil des Holzsarges bereitgestellt, so daß deshalb an diesen Stellen und in dieser Phase des Vorgangs keine Energiezufuhr von außen durch einen Brenner erforderlich ist. Dies reduziert einerseits die Bereitstellung (Menge) zugeführter Stützenergie (Erdgas) über die Brenner und senkt andererseits den Anteil von Kohlenmonoxid im Rauchgas bzw. setzt ihn ganz auf Null herab.

Daß bei diesem gesamten Vorgang nicht nur reiner Sauerstoff zur Verfügung gestellt wird, sondern dieser rezirkulierendem Rauchgas zugemischt wird, hat seine Ursache darin, daß ansonsten die Temperatur im Ofenraum unzulässig hoch werden würde. Das rückgeführte überwiegend aus CO₂ bestehende Rauchgas übernimmt die Kühlfunktion sowie die Wärmetransportfunktion des substituierten Stickstoffs.

Die Rauchgasrückführung erfolgt ohne Kühlung. Dies hat zur Folge, daß die zusätzlich erforderliche Erhitzung des Ofenraumes durch Zufuhr von Stützenergie, an die Brenner 5 und 6 entsprechend mit entsprechend größeren Zuschaltzyklen eingetellt werden kann. Daher ist es möglich, die Brenner sogar teilweise abzuschalten, nämlich dann, wenn - bei Beginn des Verbrennungsvorganges - der Sarg 2 selbst zu brennen beginnt. Die Aufrechterhaltung einer hohen Temperatur durch Rezirkulierung des ungekühlten Rauchgases sowie die gleichzeitige Zurverfügungstellung von Sauerstoff ermöglichen somit eine zeitweise Aufrechterhaltung des Verbrennungsvorganges ohne Betätigung der Brenner, d.h. ohne Stützenergie. Dadurch kann erheblich Energie eingespart werden, und zwar sowohl hinsichtlich der Stützenergie, als auch hinsichtlich des Sauerstoffes. Dadurch erfolgt gleichzeitig auch eine Reduzierung des entstehenden Kohlendioxids, das ja auch wegen des sog. Treibhauseffektes umweltbedenklich ist.

Diese erhöhte Wärmenutzung durch hohe Wärmerückführung im Kreislauf gleicht auch aus, daß in der Regel aus Pietätsgründen bei einer Verbrennungsanlage dieser Art keine Wärmenutzung durch Heizung anderer Anlagen oder durch Betreiben einer Kältemaschine erfolgt, wenngleich entsprechende zusätzliche Einrichtungen vorteilhafte Weiterbildungen der Erfindung darstellen. Im übrigen ist die Abwärmenutzung in heizfreien Perioden in jedem Fall problematisch.

Die gesamten Vorgänge bedürfen einer Regelung in Abhängigkeit des Verlaufes des Verbrennungsvorganges. Dieser verläuft stark schwankend, da, wie erwähnt, zunächst das Verbrennen des Sarges erfolgt. Dann beginnt die Verbrennung der Leiche. Dieser Vorgang ist aber, da der menschliche Körper zu einem hohen Anteil aus Wasser besteht, weitgehend ein Verdunstungs- und nicht ein Verbrennungsvorgang. Es ist also erforderlich, in der Anfangsphase zur Vermeidung des Entstehens von CO (Kohlenmonoxid) sehr viel mehr Sauerstoff - wie erwähnt - zur Verfügung zu stellen als in der späteren Phase des Verbrennungsvorganges, während gleichzeitig in der ersten Phase erhebliche Energie durch Verbrennen des Sarges 2 bereitgestellt wird, so daß dann keine zusätzliche Zufuhr von Stützenergie erforderlich ist. Um diese Vorgänge zu steuern, ist eine Regeleinheit 30 vorgesehen, die mit einem oder mehreren Temperaturfühlern 31 und der CO-Sonde 37 verbunden ist und so zumindest die Temperatur im Verbrennungsofen 1 erfaßt. In Abhängigkeit davon wird die Leistung der Brenner 5 und 6 über die Steuerleitungen 32, 33, sowie die Menge des rezirkulierten Rauchgases durch Einstellung der Regelklappen 13, 15 über Steuerleitungen 34, 35 geregelt. Zusätzlich ist ggf. vorgesehen, daß die Menge des von der Sauerstoffquelle 11 abgegebenen Sauerstoffes auf die Leitungen 10 bzw. 16 über die Regelungseinheit getrennt und unabhängig einstellbar ist. Dabei wird insbesondere das CO im Rauchgas kontinuierlich durch eine CO-Sonde 37 gemessen. Die Regelgröße beeinflußt die Sauerstoffzufuhr bzw. -kon-zentration im Ofenraum.

Ein weiterer Vorteil der hier vorgeschlagenen Verfahrensführung ergibt sich bei der Dimensionierung. Während bei der konventionellen Verbrennung der Rauchgasvolumenstrom ca. 2200 bis 2500 Nm³/h Rauchgas beträgt, kann er unter den geschilderten Kreislaufbedingungen auf etwa ein Viertel, d.h. auf 400-600 Nm³/h Rauchgas ausgelegt werden. Dies ermöglicht eine erhebliche Verkleinerung von neuen Anlagen bei gleichzeitiger Leistungserhöhung. Darüberhinaus wird die Nachrüstung bestehender Anlagen erheblich erleichtert. Durch das erfindungsgemäße Verfahren wird die Verbrennungsdauer erheblich abgekürzt. Während bei der konventionellen Feuerbestattung die Verbrennung in der Anfangsphase mehr ein Schwellprozeß (Co-Bildung) ist, wird bei der Erfindung der Verbrennungsvorgang durch konzentrierte Sauerstoffzufuhr erheblich beschleunigt. Dies ist angesichts der zunehmenden Zahl von Feuerbestattungen von großer Bedeutung.

Die Bereitstellung technisch erzeugten Sauerstoffs in Vorratsbehältern erfolgt im Normalfall in flüssiger Form mit einer Verdampfungseinheit. Man kann aber auch eine On-site-Anlage zur Sauerstofferzeugung nach dem Druckwechselabsorptions-bzw. Membran-Prinzip vorsehen.

Ein weiterer Vorteil der dargestellten Verfahrensführung besteht in der verringerten Menge der erforderlichen Betriebsmittel. Die üblicherweise erforderliche katalytische Entstickung bzw. die Beigabe von Aktivkohle, "Sorbalit", usw., kann erheblich verringert werden. Da die Verbrennung ohne Luft erfolgt und damit die Entstehung der Stickoxide gegen Null geht, dient die Reinigung des Abgases in dem Reaktor 19 im wesentlichen nur noch der Beseitigung der bei der Verbrennung durch Sarg und Leiche entstehenden Dibenzodioxine und Dibenzofurane, sowie der Giftstoffe, die durch die Verbrennung von Schwermetall, z.B. Quecksilber (Anteil an Amalgan-Plomben), usw. entstehen.

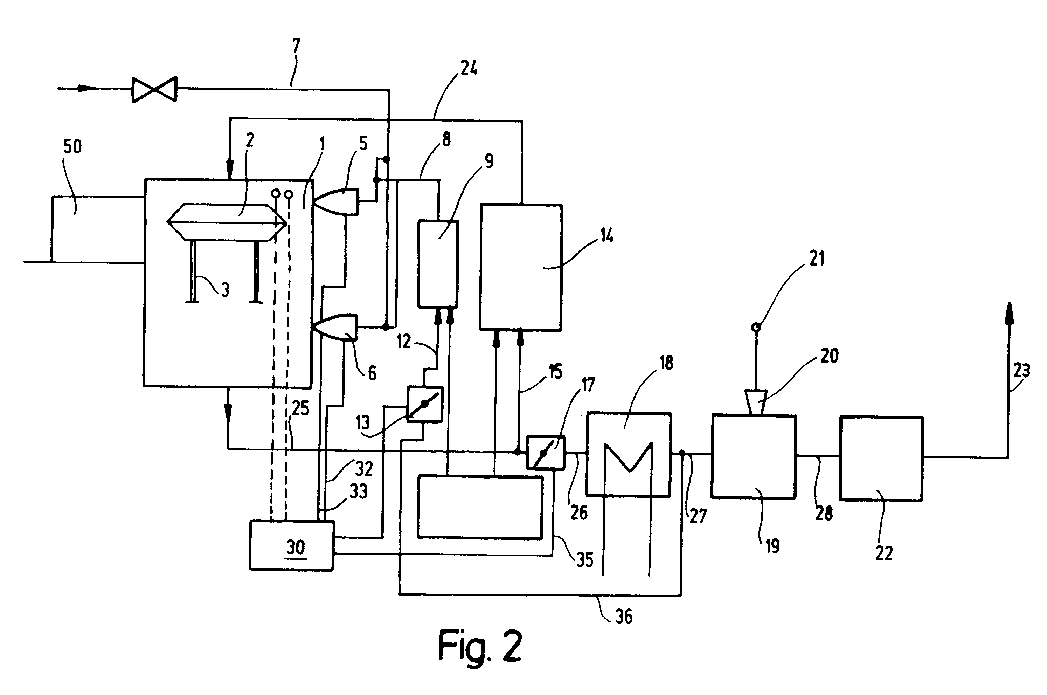

Figur 2 zeigt ein weiteres Ausführungsbeispiel, daß von dem in Figur 1 gezeigten Ausführungsbeispiel insoweit abweicht, als die Rückführung vom Rauchgas über Klappe 13 und Mischer 9 an die Brenner 5 bzw. 6 erst von einem Punkte hinter dem Wärmetauscher 18 erfolgt. Dies ermöglicht den Einsatz konventioneller Brenner, da abgekühltes Rauchgas in diese eintritt. Es ist also nicht erforderlich, die Brenner 5 und 6 wie in Figur 1 auf erhöhte Temperaturen auszulegen. Die Rauchgasrezirkulierung erfolgt ansonsten nachwievor über die Leitung 15, den Mischer 14 und die Leitung 24.

Figur 3 zeigt die flexible Schleuse 50. Der Zweck ergibt sich aus folgenden Verfahrensanfordernissen: Ist ein Sarg 2 verbrannt, etwa nach 60-90 Minuten, so wird die Tür 40 des Verbrennungsofens 1 geöffnet (z.B. motorisch hoch gehoben oder zur Seite geschoben). Über eine Zuführeinrichtung wird ein weiterer Sarg 2 in den Verbrennungsofen 1 eingeführt. Erfolgt dies ohne besondere Vorkehrungen, so dringt dabei natürliche Luft in den Verbrennungsraum 1 ein und kann zur Bildung von Stickoxiden bei der nachfolgenden Verbrennung führen. Wenn man Vorkehrungen triff, um das Eintreten von Luft in den Verbrennungsraum 1 während des Beschickungsvorgangs zu vermeiden, dann kann man auch während dieses Wechselvorgangs die Rezirkulierung des Rauchgases ohne Beimischung von O₂ und ohne Betätigung der Brenner 5,6 weiterlaufen lassen, d.h. die Temperatur im Verbrennungsraum 1 auf hohem Niveau (650 bis 1000 Grad C) halten, ohne daß sich daraus negative Folgen ergeben, während gleichzeitig damit ein weiterer Energiespareffekt durch Vermeidung der Wiederaufheizphase erzielt wird. Außerdem wird dadurch Zeit eingespart.

Im Ausführungsbeispiel nach Figur 3 wird die flexible Schleuse 50 dadurch gebildet, daß - wie an sich bereits bekannt - der Sarg 2 auf einer Platte 51 liegt. Diese Platte ist sowohl in Richtung auf die Tür 40 (siehe den Pfeil 52) hin und her, als auch durch eine Hubeinrichtung 53 in auf und ab (siehe Pfeil 54) verschiebbar. Bei geöffneter Tür 40 wird der Sarg 2 durch entsprechende Bewegung der Platte 51 in den Verbrennungsraum 1 eingeführt und auf den Stützen 3 abgesetzt. Die Erfindung sieht nun vor, daß zwischen dem Plattenträger 55 und dem Verbrennungsofen im Bereich der Tür 40 ein flexibler Balg 56 vorgesehen ist, so daß, den Sarg 2 umgebend, während des Beschickungsvorganges um den Sarg 2 herum ein abgeschlossener Raum 60 entsteht. Das Beladen der Platte 51 mit dem Sarg 2 erfolgt, nachdem man einen Verschluß 57, der nur schematisch angedeutet ist, gelöst hat. Der Raum 60 innerhalb des Balges 56 steht über eine Luftleitung 61 mit einer Abluftpumpe 62 in Verbindung. Auf diese Weise kann man dafür sorgen, daß in dem Raum 60 im Vergleich zum atmosphärischen Druck ein gewisser Unterdruck herrscht, der dafür sorgt, daß bei geöffneter Tür 40 keine Luft vom Raum 60 in den Verbrennungsofen 1 übertritt.

## Patentansprüche

1. Verfahren zur Feuerbestattung von sich in Särgen (2) befindenden Leichen in einem Verbrennungsofen (1), in dessen Wandung zumindest ein Brenner (5, 6) angeordnet ist, dem Brennstoff zugeführt wird, und bei dem die Ableitung des bei der Verbrennung entstehenden Rauchgases durch eine Leitung (25) erfolgt, **dadurch gekennzeichnet,** daß die Verbrennung im Verbrennungsofen (1) ohne Zufuhr natürlicher Luft erfolgt, daß mindestens die Hälfte der den Verbrennungsraum (1) verlassenden Rauchgase von der Leitung (25) abgezweigt und daß diesen zur Bildung eines Rauchgaskreislaufes (8, 9, 12, 25; 15, 24, 25) Sauerstoff zugemischt (9, 14) wird, dass ein Teil des Gemisches dem Verbrennungsraum (1) direkt und ein Teil des Gemisches dem Brenner (5, 6) zugeführt wird, und daß eine Regeleinheit (30) mittels zumindest eines im Verbrennungsofen (1) angeordneten Temperaturfühlers (31) die Zufuhr des Rauchgas/Sauerstoff-Gemisches zu dem Brenner (5, 6) derart regelt, daß die Temperatur im Verbrennungsofen (1) innerhalb eines vorbestimmten Bereiches bleibt und den Brenner (5, 6) abschaltet, wenn die Temperatur bei bloßer Zufuhr von Sauerstoff mittels des Rauchgas/Sauerstoff-Gemisches zur Verbrennung infolge der durch die Särge zur Verfügung gestellten Energie ohne Verbrennung von Brennstoff erreicht wird.

2. Verfahren nach Anspruch 1, dadurch gekennzeichnet, daß das Verhältnis von Sauerstoff und Rauchgas in zwei Mischern (9, 14) und die Menge rezirkulierten Rauchgases, das jeweils den Mischern (9, 14) zugeführt wird, jeweils unabhängig voneinander einstellbar sind.

3. Verfahren nach Anspruch 1 oder 2, dadurch gekennzeichnet, daß bei Beginn des Verbrennungsvorgang der Teil des Gemisches aus Sauerstoff und rezirkuliertem Rauchgas, der direkt dem Verbrennungsofen (1) zugeführt wird, samt dem darin enthaltenen Anteils Sauerstoff soweit erhöht wird, daß unter Berücksichtigung des durch den verbrennenden Sarg zur Verfügung gestellten Kohlenstoffs eine im wesentlichen kohlenmonoxidfreie Verbrennung erfolgt.

4. Verfahren nach Anspruch 1, dadurch gekennzeichnet, daß der Temperaturbereich derjenige von 650 - 1.000° ist.

5. Verfahren nach Anspruch 1 oder einem der folgenden, dadurch gekennzeichnet, daß der Rauchgasvolumenstrom im Kreislauf 400 - 600 Nm³/h beträgt.

6. Verfahren nach Anspruch 1 oder einem der folgenden, dadurch gekennzeichnet, daß der Anteil des rezirkulierten Rauchgases ungefähr 3/4 der insgesamt aus dem Verbrennungsofen abgeführeten Rauchgase beträgt.

7. Verfahren nach Anspruch 1 oder einem der folgenden, dadurch gekennzeichnet, daß die Wärme des dem Kamin zugeführten Teils des Rauchgases in einer Absorptionskälteanlage zur Kälteerzeugung eingesetzt und diese zur Kühlung des Raumes für die Aufbewahrung von Leichen eingesetzt wird.

8. Verfahren nach Anspruch 1 oder einem der folgenden, dadurch gekennzeichnet, daß die Beschickung des Verbrennungsofens (1) mit einem Sarg (2) mittels einer flexiblen Schleuse (50, 56) erfolgt, die während des Beschickungsvorganges bei geöffneter Tür (40) einen Raum (60) von der Umgebung trennt und der Raum (60) innerhalb der Schleuse zur Vermeidung des Eintritts stickstoffhaltiger atmosphärischer Luft in den Verbrennungsofen (1) mit Unterdruck beaufschlagt wird.

9. Verfahren nach Anspruch 1 oder einem der folgenden, dadurch gekennzeichnet, daß zwischen den Verbrennungszyklen zweier Särge die Rezirkulierung des Rauchgases ohne Zumischung von Sauerstoff und ohne Zufuhr von Brennstoff aufrechterhalten wird.

10. Verfahren nach Anspruch 1 oder einem der folgenden, dadurch gekennzeichnet, daß die Wärme des dem Kamin (23) zugeführten Teils des Rauchgases einer Wärmerückgewinnung zu Heizzwecken zugeführt wird.

11. Verfahren nach Anspruch 1 oder einem der folgenden zur Verbrennung von Verbrennungsobjekten, die jeweils einzeln in Verbrennungsöfen eingebracht und darin verbrannt werden und die zu Beginn des Verbrennungsvorganges stärker als im weiteren Verlauf der Verbrennung selbst Kohlenstoff für die Verbrennung zur Verfügung stellen.

12. Einrichtung zur Feuerbestattung von in Särgen befindlichen Leichen mit einem Verbrennungsofen (1), in dessen Wandung zumindest ein Brenner (5, 6) angeordnet ist, dem Brennstoff zugeführt wird und mit einer Leitung (25) zur Ableitung des Rauchgases, dadurch gekennzeichnet, daß von der Leitung (25) zur Ableitung des Rauchgases Leitungen (12, 15) zur Rezirkulierung eines Teils des Rauchgases abgezweigt sind, daß zumindest einem Teil des zur Rezirkulation abgezweigten Teils des Rauchgases in einem Mischer (9) von einer Quelle mindestens zu 90 % reinen Sauerstoffs (11) bereitgestellter Sauerstoff beigemischt wird und das Gemisch dem Brenner (5, 6) zugeführt wird, daß dem anderen Teil des zur Rezirkulation abgezweigten Rauchgases ebenfalls in einem Mischer (14) mindestens zu 90 % reiner Sauerstoff beigemischt und dieser Teil direkt dem Verbrennungsofen (1) zugeführt wird, und daß eine Regeleinheit (30) vorgesehen ist, die mittels zumindest eines im Verbrennungsofen (1) angeordneten Temperaturfühlers (31) die Zufuhr von Rauchgas/Sauerstoff-Gemisch zu dem Brenner (5, 6) derart regelt, daß die Temperatur im Verbrennungsofen (1) innerhalb eines vorbestimmten Bereiches bleibt und den Brenner (5, 6) abschaltet, wenn die Temperatur bei bloßer Zufuhr von Sauerstoff mittels des Rauchgas/Sauerstoff-Gemisches zur Verbrennung des Sarges infolge der durch den Sarg zur Verfügung gestellten Stützenergie ohne zusätzliche Verbrennung von Brennstoff erreicht wird.

13. Einrichtung nach Anspruch 13, dadurch gekennzeichnet, daß dem Mischer (9), von dem Gemisch an den Brenner (5, 6) geführt wird, ein Wärmetauscher (18) vorgeschaltet ist.

14. Einrichtung nach Anspruch 13, dadurch gekennzeichnet, daß der Wärmetauscher (18) in einer Leitung (26, 27, 28) angeordnet ist, in der -nach Abzweigung des rezirkulierten Teils des Rauchgases- das nicht rezirkulierte Rauchgas dem Kamin (23) zugeführt wird.

15. Einrichtung nach Anspruch 12, dadurch gekennzeichnet, daß Mittel (30, 13, 17) vorgesehen sind, mit denen das Verhältnis von Sauerstoff und Rauchgas in den beiden Mischern (9, 14) und die Menge des rezirkulierten Rauchgases, die den Mischern (9, 14) zugeführt wird, unabhängig voneinander einstellbar sind.

16. Einrichtung nach Anspruch 12 oder einem der folgenden, dadurch gekennzeichnet, daß vor der Tür (40) des Verbrennungsofens (1) zur Beschickung desselben eine Beschickungseinrichtung (50), vorgesehen ist, die eine Transporteinrichtung (51-56, 60) aufweist, die Mittel (56) aufweist, die einen Raum (60) der Transporteinrichtung, in dem der Sarg (2) während des Beschickungsvorganges bei geöffneter Tür (40) des Verbrennungsofens (1) angeordnet ist, von der Umgebung trennt und dass ferner Mittel (61, 62) vorgesehen sind, um diesem Raum (60) während des Beschickungsvorganges mit Unterdruck zu beaufschlagen.

## Claims

1. Method of cremation of bodies situated in coffins (2) in a furnace (1), in the wall of which is disposed at least one burner (5, 6) to which fuel is supplied, wherein the discharge of the flue gas produced during the combustion takes place via a pipe (25), characterised in that the combustion takes place in the furnace (1) without the supply of natural air, that at least half of the flue gases leaving the combustion chamber (1) is branched off from the pipe (25) and that oxygen is admixed therewith (9, 14) in order to form a flue gas circulation (8, 9, 12, 25; 15, 24, 25), that a portion of the mixture is fed directly to the combustion chamber (1) and a portion of the mixture is fed to the burner (5, 6), and that by means of at least one temperature sensor (31) disposed in the furnace (1) a control unit (30) controls the supply of the flue gas/oxygen mixture to the burner (5, 6) in such a way that the temperature in the furnace (1) remains within a predetermined range and switches off the burner (5, 6) when, due to the energy made available by the coffins, the temperature is reached without burning fuel, oxygen being simply supplied by means of the flue gas/oxygen mixture.

2. Method according to Claim 1, characterised in that the ratio of oxygen to flue gas in two mixers (9, 14) and the quantity of recirculated flue gas which is supplied to each of the mixers (9, 14) are in each case adjustable independently of one another.

3. Method according to Claim 1 or 2, characterised in that at the beginning of the combustion operation the portion of the mixture of oxygen and recirculated flue gas which is supplied directly to the furnace (1), together with the proportion of oxygen contained therein, is increased to such an extent that, taking into account the carbon made available by the burning coffin, a substantially carbon monoxide-free combustion takes place.

4. Method according to Claim 1, characterised in that the temperature range is from 650 to 1000°.

5. Method according to Claim 1 or one of the following claims, characterised in that the volumetric flow of the flue gas in the circulation amounts to 400 - 600 Nm³/h.

6. Method according to Claim 1 or one of the following claims, characterised in that the proportion of recirculated flue gas amounts to approximately ¾ of the total flue gas led off from the furnace.

7. Method according to Claim 1 or one of the following claims, characterised in that the heat from the portion of the flue gas delivered to the chimney is used in an absorption refrigeration system for refrigeration and this is used for cooling the room for the storage of bodies.

8. Method according to Claim 1 or one of the following claims, characterised in that the charging of the furnace (1) with a coffin (2) takes place by means of a flexible lock (50, 56) which separates a chamber (60) from the surroundings during the charging operation with the door open and the chamber (60) within the lock is supplied with negative pressure in order to avoid the penetration of nitrogenous atmospheric air into the furnace (1).

9. Method according to Claim 1 or one of the following claims, characterised in that between the combustion cycles of two coffins the recirculation of the flue gas is maintained without the admixture of oxygen and without the supply of fuel.

10. Method according to Claim 1 or one of the following claims, characterised in that the heat of the portion of the flue gas delivered to the chimney (23) is delivered to a heat recovery means for heating purposes.

11. Method according to Claim 1 or one of the following claims for the combustion of objects for combustion which are each introduced individually into furnaces and are burnt therein and which make carbon available for the combustion more markedly at the start of the combustion operation than in the further course of the combustion.

12. Apparatus for cremation of bodies situated in coffins with a furnace (1), in the wall of which is disposed at least one burner (5, 6) to which fuel is supplied and with a pipe (25) for discharge of the flue gas, characterised in that from the pipe (25) for discharge of the flue gas pipes (12, 15) are branched off for recirculation of a portion of the flue gas, that oxygen provided from a source of at least 90% pure oxygen (11) is admixed in a mixer (9) with at least part of the portion of the flue gas branched off for recirculation and the mixture is supplied to the burner (5, 6), that at least 90% pure oxygen is also admixed in a mixer (14) with the other portion of the flue gas branched off for recirculation and this portion is supplied directly to the furnace (1), and that a control unit (30) is provided which by means of at least one temperature sensor (31) disposed in the furnace (1) controls the supply of flue gas/oxygen mixture to the burner (5, 6) in such a way that the temperature in the furnace (1) remains within a predetermined range and switches off the burner (5, 6) when, due to the back-up energy made available by the coffin, the temperature is reached without additional burning of fuel, oxygen being simply supplied by means of the flue gas/oxygen mixture.

13. Apparatus according to Claim 13 [sic], characterised in that a heat exchanger (18) is connected before the mixer (9) from which the mixture is passed to the burner (5, 6).

14. Apparatus according to Claim 13, characterised in that the heat exchanger (18) is disposed in a pipe (26, 27, 28) in which - after branching off of the recirculated portion of the flue gas - the flue gas which has not been recirculated is delivered to the chimney (23).

15. Apparatus according to Claim 12, characterised in that means (30, 13, 17) are provided with which the ratio of oxygen to flue gas in the two mixers (9, 14) and the quantity of recirculated flue gas which is supplied to each of the mixers (9, 14) are adjustable independently of one another.

16. Apparatus according to Claim 12 or one of the following claims, characterised in that before the door (40) of the furnace (1) for charging the latter a charging arrangement (50) is provided which has a transport arrangement (51-56, 60) having means (56) by which a chamber (60) of the transport arrangement in which the coffin (2) is disposed are separated from the surroundings during the charging operation with the door (40) of the furnace (1) open, and that furthermore means (61, 62) are provided in order to supply this chamber (60) with negative pressure during the charging operation.

## Revendications

1. Procédé pour l'incinération de cadavres se trouvant dans des cercueils (2), dans un incinérateur (1), dans la paroi duquel est disposé au moins un brûleur (5, 6) auquel on envoie du combustible et dans lequel le gaz de combustion créé par la combustion est évacué par une canalisation (25), caractérisé en ce que la combustion est réalisée dans l'incinérateur (1) sans alimentation en air naturel, en ce que au moins la moitié des gaz de combustion quittant l'incinérateur (1) est dérivé par la canalisation (25) et en ce que, pour la formation d'un circuit de gaz (8, 9, 12; 25 ; 15, 24, 25), on les mélange (9,14) avec de l'oxygène; en ce qu'une partie du mélange est envoyée directement à l'incinérateur (1) et une partie du mélange est envoyée au brûleur (5, 6), et en ce qu'une unité de régulation (30) régule, au moyen d'au moins un capteur de température (31) disposé dans l'incinérateur (1), l'envoi du mélange des gaz de combustion et de l'oxygène au brûleur (5, 6), de telle manière que la température dans l'incinérateur (1) reste à l'intérieur d'une gamme prédéterminée et arrête le brûleur (5, 6) lorsque la température est atteinte sans combustion de combustible avec seulement un envoi d'oxygène au moyen du mélange des gaz de combustion et de l'oxygène pour la combustion, du fait de l'énergie mise à disposition par les cadavres.

2. Procédé selon la revendication 1, caractérisé en ce que le rapport entre l'oxygène et le gaz de combustion dans deux mélangeurs (9; 14) et la quantité du gaz de combustion recyclé, qui est envoyée, à chaque fois, aux mélangeurs (9; 14), sont réglables, à chaque fois, indépendamment l'un de l'autre.

3. Procédé selon la revendication 1 ou 2, caractérisé en ce que, au début du processus de combustion, la partie du mélange de l'oxygène et gaz de combustion recyclé qui est envoyée directement à l'incinérateur (1) est augmentée avec la prenant en compte le carbone mis à disposition par le cercueil en combustion, une combustion essentiellement sans monoxyde de carbone se produit.

4. Procédé selon la revendication 1, caractérisé en ce que la gamme de températures de celui-ci est de 650 à 1 300 °.

5. Procédé selon la revendication 1 ou l'une quelconque des revendications suivantes, caractérisé en ce que le flux en volume de gaz de combustion dans le circuit est de 400 à 500 m³/h dans les conditions normales.

6. Procédé selon la revendication 1 ou l'une quelconque des revendications suivantes, caractérisé en ce que la proportion du gaz de combustion recyclé est environ égale à ¾ de l'ensemble du gaz de combustion extrait de l'incinérateur.

7. Procédé selon la revendication 1 ou l'une quelconque des revendications suivantes, caractérisé en ce que la chaleur de la partie du gaz de combustion envoyée dans la cheminée est utilisée pour la production de froid dans une installation frigorifique à absorption et que celui-ci est utilisé pour la réfrigération de la pièce destinée à la conservation de cadavres.

8. Procédé selon la revendication 1 ou l'une quelconque des revendications suivantes, caractérisé en ce que le chargement de l'incinérateur (1) avec un cercueil (2) est réalisé au moyen d'un canal de transfert flexible (50, 56) qui, pendant le processus de chargement, la porte (40) étant ouverte, sépare une chambre (60) de l'environnement et en ce que la chambre (60) est soumise à une dépression à l'intérieur du canal de transfert pour éviter que de l'air atmosphérique chargé en azote ne pénètre dans l'incinérateur (1).

9. Procédé selon la revendication 1 ou l'une quelconque des revendications suivantes, caractérisé en ce que, entre les cycles de combustion de deux cercueils, le recyclage du gaz de combustion est maintenu sans addition d'oxygène et sans envoi de combustible.

10. Procédé selon la revendication 1 ou l'une quelconque des revendications suivantes, caractérisé en ce que la chaleur de la partie du gaz de combustion envoyée dans la cheminée est amenée à un récupérateur de chaleur à des fins de chauffage.

11. Procédé selon la revendication 1 ou l'une quelconque des revendications suivantes, pour la combustion d'objets de combustion amenés, à chaque fois, séparément dans des incinérateurs, qui y sont brûlés et qui mettent du carbone à disposition d'une manière plus intense au début du processus de combustion que lors du déroulement consécutif de la combustion elle-même.

12. Dispositif pour l'incinération de cadavres se trouvant dans des cercueils, comportant un incinérateur (1), dans la paroi duquel est disposé au moins un brûleur (5, 6), auquel on envoie du combustible, et une canalisation (25) pour l'évacuation du gaz de combustion, caractérisé en ce que, de la canalisation (25) jusqu'à l'évacuation des gaz de combustion, des canalisations (12, 15) sont branchées en dérivation pour le recyclage d'une partie du gaz de combustion, en ce qu'au moins une partie de la partie dérivée du gaz de combustion est mélangée dans un mélangeur (9) à partir d'une source avec au moins 90 % d'oxygène pur (11) d'oxygène disponible et que le mélange est envoyé au brûleur (5, 6), en ce que, à l'autre partie du gaz de combustion dérivée pour le recyclage, on ajoute, également dans un mélangeur (14), au moins 90 % d'oxygène pur et que cette partie est envoyée directement à l'incinérateur (1), et en ce que l'on prévoit une unité de régulation (30), qui, au moyen d'au moins un capteur de température (31) disposé dans l'incinérateur (1), régule l'envoi du mélange des gaz de combustion et de l'oxygène au brûleur (5, 6) de telle manière que la température dans l'incinérateur (1) reste à l'intérieur d'une gamme prédéterminée et arrête le brûleur (5, 6) lorsque la température est atteinte sans combustion de combustible avec seulement un envoi d'oxygène au moyen du mélange des gaz de combustion et de l'oxygène pour la combustion du cercueil du fait de l'énergie d'appoint mise à disposition par les cadavres.

13. Dispositif selon la revendication 12, caractérisé en ce que, en aval du mélangeur (9), à partir duquel le mélange est envoyé au brûleur (5, 6), est disposé un échangeur de chaleur (18).

14. Dispositif selon la revendication 13, caractérisé en ce que l'échangeur de chaleur (18) est disposé dans une canalisation (26, 27, 28) dans laquelle - après dérivation de la partie recyclée du gaz de combustion - le gaz de combustion non recyclé est amenée à la cheminée (23).

15. Dispositif selon la revendication 12, caractérisé en ce que l'on prévoit des moyens (30, 13, 17) grâce auxquels le rapport entre l'oxygène et le gaz de combustion dans les deux mélangeurs (9; 14) et la quantité du gaz de combustion recyclé, envoyée aux mélangeurs (9; 14), sont réglables indépendamment l'un de l'autre.

16. Dispositif selon la revendication 12 ou l'une quelconque des revendications suivantes, caractérisé en ce que, devant la porte (40) de l'incinérateur (1), on prévoit, pour le chargement de ce dernier, un dispositif de chargement (50), qui comporte un dispositif de transport (51-56, 60), comprenant des moyens (56) qui séparent de l'environnement une chambre (60) du dispositif de transport dans laquelle le cercueil (2) est disposé pendant le processus de chargement, la porte (40) de l'incinérateur (1) étant ouverte, et en ce que l'on prévoit, en outre, des moyens (61, 62) pour soumettre cette chambre (60) à une dépression pendant le processus de chargement.
